# EUROPEAN PATENT SPECIFICATION

(11) **EP 1 891 728 B1**
(45) Date of publication and mention of the grant of the patent: **17.08.2016**
(21) Application number: 06706060.8
(22) Date of filing: 15.02.2006
(51) Int. Cl.: H02P 9/00

(54) **AN ELECTRIC CONVERTER SYSTEM COMPRISING STORAGE MEDIA HAVING DIFFERENT STORING CAPACITIES**
ELEKTRISCHES WANDLERSYSTEM MIT SPEICHERMEDIEN MIT VERSCHIEDENEN SPEICHERKAPAZITÄTEN
SYSTEME DE TRANSFORMATEUR ELECTRIQUE COMPRENANT UN SUPPORT DE STOCKAGE POSSEDANT DIFFERENTES CAPACITES DE STOCKAGE

(30) Priority: 17.02.2005 DK 200500251
(43) Date of publication of application: 27.02.2008
(73) Proprietor: Reelight APS, B260 Viby 3 (DK)
(72) Inventor: PEDERSEN, Troels, DK-2990 Nivá (DK)
(74) Representative: Plougmann Vingtoft a/s
(86) International application number: PCT/DK2006/000089
(87) International publication number: WO 2006/086987

(56) References cited:
- EP-A- 1 223 653
- EP-A- 1 383 223
- EP-A- 1 398 266

## Description

The present Invention relates to electric converter systems and particularly to electric converter systems wherein electric energy generated when a magnet passes a coil is converted into an output signal. The invention further relates to a method for using such systems.

### BACKGROUND OF THE INVENTION

A possible application of a converter system as mentioned above is for signalling devices for vehicles, such as bicycles. Such signalling devices In which the electricity needed for the signalling lights is generated by letting one or more magnets pass one or more coils, are known. Systems of this type are known from US 5,584,561. They may be used for bicycles having the magnet(s) mounted to the wheel and the coil(s) mounted to the frame. The system disclosed In US 5,584,561 comprises two sets of LEDs: one that Hashes during wheel rotation and another that flashes when there is no wheel rotation. This later flashing is controlled by an electronic chip and made possible by excess energy that has been stored in a capacitor charged during wheel rotation. However, one disadvantage of this system is that during wheel rotation the LEDs flash with a frequency corresponding to the generated input signal, i.e. depending on the speed of the vehicle. This means that the lights flash with a very low frequency at low speeds. Another disadvantage of this system is that two groups of LEDs are needed.

EP 1 398 266 discloses a bicycle power supply comprising first and second storage elements structured to receive power arising from an AC power supply for supplying power to first and second electrical components, respectively. A power inhibiting unit may be provided for preventing power from being communicated from the first storage element to the second electrical component and/or for preventing power from being communicated from the second storage element to the first electrical component.

### SUMMARY OF THE INVENTION

The present invention relates to an electric converter system according to claim 1 and a method according to claim 26.

A first aspect of the present Invention preferably relates to an electric converter system comprising at least one magnet and at least one call, said converter further comprising at least two storage media for storing electric energy generated as a result of the one or more magnet(s) passing the one or more coil(s), wherein at least two of said storage media have different storing capacities. The storage media are preferably charged one at a time in a predefined order.

The storing capacities may e.g. differ for all the storage media. Another possibility Is that the storing capacity of one storage medium may differ from those of the others which are equal or which are equal for a group of storage media. The predefined order may e.g. be that the storage media are charged one at a time in such a way that when one medium is fully charged, then the charging of the next medium is initiated.

In a preferred embodiment of the invention, the storage medium to be charged first has the shortest charging time for being fully charged. The converter system may comprise one or more controllers controlling the charging sequence.

The different storage media may have different storage capacities, and they are preferably charged in order of increasing storing capacity. The differences in storage capacities between the smallest and the largest storage media may differ with a factor of between 10 and 10.000, such as preferably with a factor in the order of 1000.

The actual amount of energy stored in each storage medium may be used to determine which storage medium that is to be charged at a given time. Furthermore, the storage media may be discharged in order of decreasing or increasing storing capacity.

In a presently preferred embodiment of the invention, one of the storage media is charged and discharged constantly during use, and the one or more others is/are discharged when the output from the first storage medium is insufficient for the actual use of the system.

One or more of the storage media may be (a) capacitor(s). One or more of the storage media may also be (a) rechargeable battery(ies).

The output signal is preferably a pulsating electric signal, and the pulsating electric signal may be generated by a blink converter. The frequency of the output signal may be constant. The frequency is preferably between 0.5 and 100 pulses per second, such as between 1 and 50 pulses per second, preferably between 1 and 10 pulses per second, such as between 1 and 5 pulses per second or between 5 and 10 pulses per second.

In a preferred embodiment of the invention, the frequency can be adjusted such as e.g. from between 1 to 5 Hz. The frequency may be manually adjusted e.g. by means of a potentiometer. The output signal may also be switchable between a flashing signal and a constant signal.

The electric converter may further comprise a rectifier, and the rectifier preferably comprises at least one diode.

In a preferred embodiment of the invention, the electric converter is used for supplying energy to at least one low energy consumption light, such as a halogen lamp or a light emitting diode. The electric converter system may be mounted on a bicycle. In this case, the magnet is preferably mounted on at least one wheel of the bicycle and the rest of the system is mounted on the bicycle frame.

It may be possible to let the output signal be switchable between a flashing signal and a constant signal. The light may e.g. be non-flashing during wheel rotation and flashing when there is no wheel rotation or vice versa. If the output signal is made constant, the generated energy may be passed by the storage media and fed directly to the light source. The frequency and/or duration of the flashing light may also vary with the amount of stored energy and/or dependent on the rotational speed of the wheel.

A second aspect of the present invention preferably relates to a bicycle having an electric converter system as described above.

A third aspect of the present invention preferably relates to a method for controlling the charging and discharging of the storage media. The method may comprise the steps of charging. The first medium being a first capacitor until a certain voltage U1 is measured over the first capacitor by the controller, charging a larger second capacitor only when the first capacitor is retaining the certain voltage U1, and
discharging the system by connecting the two capacitors in parallel and discharging them as one larger capacitor.

### BRIEF DESCRIPTION OF THE DRAWINGS

In the following, preferred embodiments of the present invention will be described in details with reference to the accompanying figures in which:
Fig. 1 shows an example of a possible energy pulse induced when a magnet circuit passes a coil.
Fig. 2 is a schematic illustration of an electric converter system comprising more than one storage medium having different storing capacities.
Fig. 3 shows schematically a preferred embodiment of the invention.

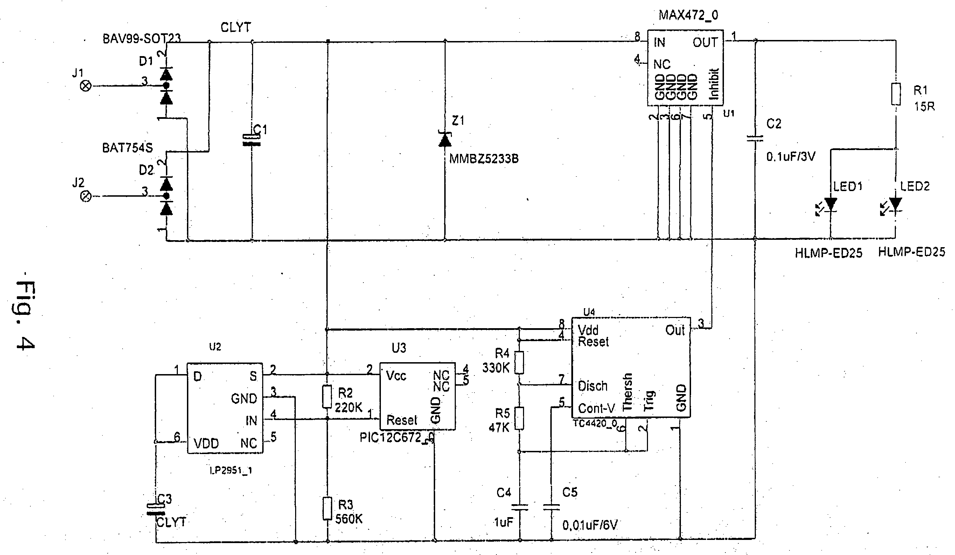

Fig.4 is a schematic electrical diagram of a preferred embodiment of the invention.

### DETAILED DESCRIPTION OF PREFERRED EMBODIMENTS

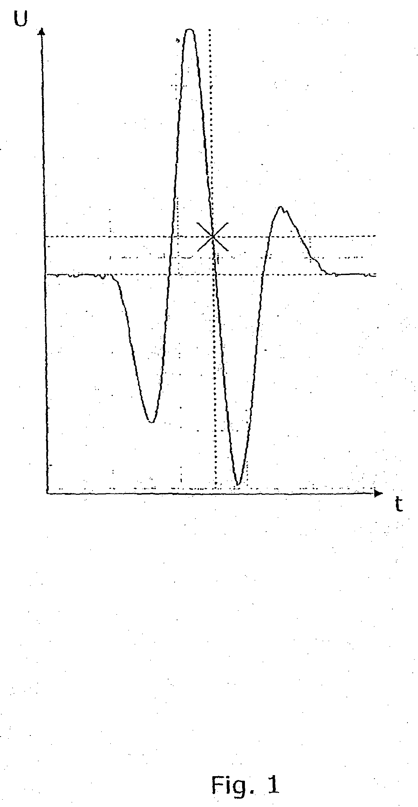

Fig. 1 shows an example of a possible energy pulse induced when a magnet circuit having a certain number of magnets passing a coil. The curve may in principle have many different shapes.

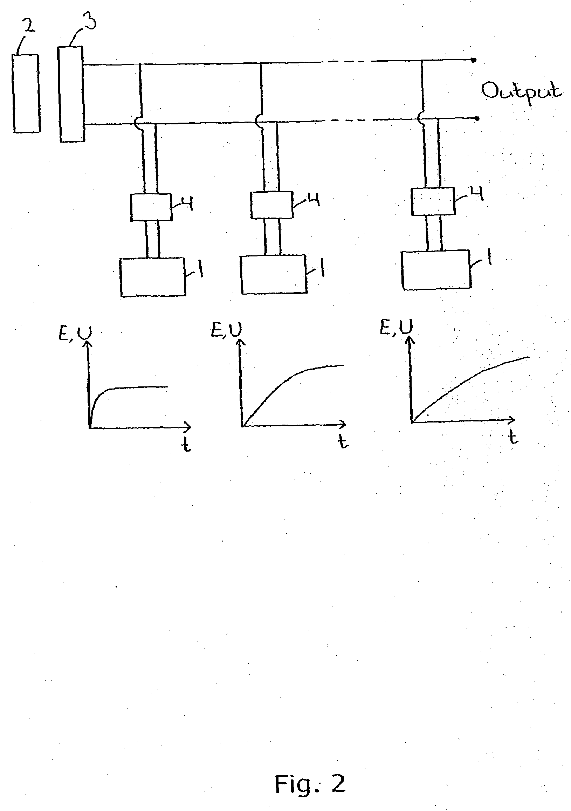

Fig. 2 shows schematically an electric converter system according to the invention, the system comprising storage media 1 having different storage capacities. The system comprises a magnet 2 and a coil 3 for generation of electric energy when the magnet 2 passes the coil 3. The system may also comprise two or more magnets and/or coils, and the number of magnets and coils may be the same or differ. It may e.g. be advantageous to have more than one magnet mounted on a moving object passing a coil to increase the amount of induced energy as compared to having only one magnet. The advantage will depend on to which extent the additional number of magnets increases the amount of work needed to enable the movement of the magnets. In another embodiment the one or more magnet(s) is/are stationary and one or more coil(s) is/are moved in relation thereto.

The desired output signal differs from the input signal. This output signal may be a pulsating signal with constant frequency. However, the invention may be used for any electrical equipment in which the output signal differs from the input signal. It is particularly advantageous for applications in which it is desired to store an amount of the induced energy for later use, e.g. for use during periods in which the amount of output energy exceeds the amount of input energy at a given moment.

The system comprises at least two storage media 1 that are charged one at a time in a sequence controlled by one or more controllers 4. The sequence may e.g. be that one medium is fully charged before the next is begins to be charged. Another possibility is that charging is changed from one medium to another before the first is fully charged. The one or more controllers 4 may be contained in one separate unit or in a number of separate units e.g. corresponding to the number of storage media. The controller(s) may also be integrated with other parts of the system, in such a way that each controller is integrated with a storage medium. The one or more controllers 4 preferably comprise(s) a switch (not shown) for each storage medium 1, the switch being switchable between two states. In one of the states there is electrically conductive connection between the storage medium 1 and the coil 3 whereby the storage medium 1 is charged. In the other state the electrical contact is disconnected whereby there is no energy flow to or from the storage medium 1. One or more controller(s) may also be used to control the flow of energy from the storage media to the outputs of the system. This may be carried out by the same controller(s) used for control of the flow of energy from the coil to the storage media, or it may be carried out by separate controller(s).

Relations between any suitable variables may be used to characterise the storage characteristics of the storage media. They may e.g. be described by the stored energy as a function of time. When the storage media are capacitors, the storage characteristics may be described by the voltage as a function of time.

The storage media are preferably charged in a predefined order, such as e.g. in order of increasing storing capacity. It is furthermore preferred that the storage medium 1 having the smallest storing capacity is charged fastest. Fig. 2 illustrates a preferred embodiment in which a higher storing capacity of a storage medium also means a slower charging. This will often be the case, and a purpose of having more than one storage medium is therefore to obtain a system which has both a high total storing capacity and a short time before a maximum energy level is reached in one of the storage media 1; i.e. before an output signal of full strength is available. However, one or more of the storage media 1 may also have the same storage capacities and/or the same charging speed.

The time needed before a charging medium is fully charged, or at least close to fully charged, such as up to 90% of the total storing capacity, may e.g. be in the order of a few seconds for the storage medium having the steepest charging characteristic, whereas it may be in the order of several minutes for the next storage medium to be charged. In another embodiment the storage medium with the smallest storing capacity is charged faster than the others, whereas the others have the same storage speed of at least up to a certain level compared to being fully charged. The storing characteristics may show a linear dependence between the variables, such as e.g. stored energy as a function of time, at least at the beginning of the charging curve; the dependence may also be non-linear. The type of dependence may be the same or different for the storage media in a system according to the invention.

The storage media of the system may be any media applicable for being charged and discharged with electric energy. It may e.g. be a capacitor or a rechargeable battery.

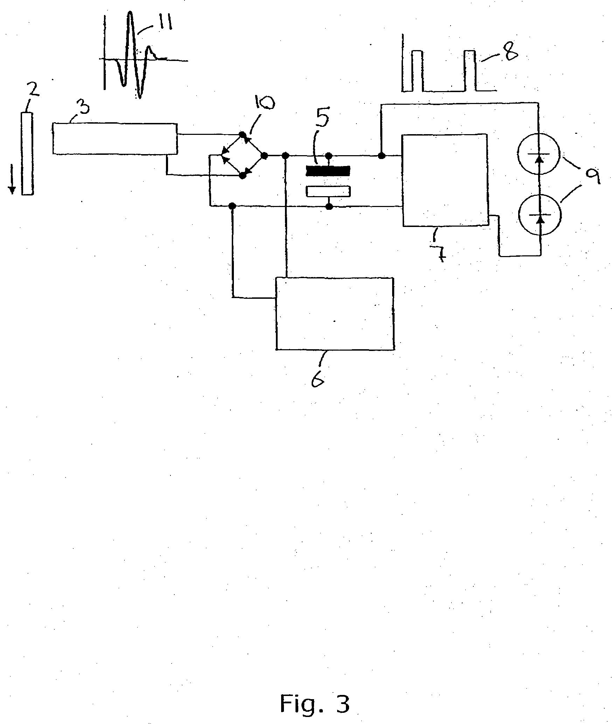

Fig. 3 shows schematically a preferred embodiment of the invention having two storage media wherein at least one of the storage media is a capacitor 5. The other storage medium may e.g. be another capacitor or a rechargeable battery. In figure 3, the second storage medium is shown as being integrated with the controller in a separate unit 6. The difference in storage capacity between the two storage media may be a factor between 10 and 10.000, such as in the order of 1000. The output is connected to a pulse generator 7 which generates a pulsating current 8 as shown in the figure. The current is illustrated as supplying power to two LEDs 9. Another possible application could be any desired number of LEDs or other types of lights, such as a halogen lamp. The preferred embodiment shown in fig. 3 further comprises a rectifier 10.

In the preferred embodiment shown, the capacitor 5 is the primary storage medium which is constantly charged and discharged. A purpose is to enable an output pulse signal 8 having a frequency different from the generated input signal 11. The purpose of the other secondary storage medium (contained in 6) is to store energy for use when the amount discharged from the primary storage medium, the capacitor 5, is insufficient for the actual purpose.

A possible application of the present invention is for mounting on a bicycle to enable signalling by means of LEDs. In a preferred application magnets are placed on the wheels of the bike and two coils are placed on the frame at positions passed by the magnets. The invention makes it possible to have the LEDs flashing with a constant frequency or be constantly lit independent of the speed of the bicycle. The storage media furthermore means that the LEDs can keep signalling for a while after the bike is stopped, the actual possible period of time being dependent on the amount of stored energy. For such an application, the system will preferably also comprise a manual switch for switching off the signalling light. The system may preferably further comprise a switch for passing the generated energy by the storage media thus being fed directly to the light source e.g. when the output signal is made constant. The different components of the system may preferably be integrated in a single containing unit. Other functionalities may be added to the system such as generation of additional and/or alternative output signals e.g. a braking signal.

## Claims

1. An electric converter system for supplying energy to at least one low energy consumption light comprising at least one magnet and at least one coil, said converter further comprising at least two storage media comprising a primary storage medium which is a capacitor (5) and a secondary storage medium for storing electric energy generated as a result of the one or more magnet(s) passing the one or more coil(s), wherein the primary and secondary storage media have different storage capacities, **characterized in that** the primary storage medium to be charged first has the shortest charging time for being fully charged, and **in that** the purpose of the secondary storage medium is to store energy for use when the amount discharged from the primary storage medium is insufficient for the actual purpose.

2. An electric converter system according to claim 1, wherein the storage media are charged one at a time in a predefined order.

3. An electric converter system according to any of the preceding claims, wherein the converter system comprises one or more controllers controlling the charging sequence.

4. An electric converter system according to any of the preceding claims, wherein the different storage media have different storage capacities, and they are charged in order of increasing storage capacity.

5. An electric converter system according to any of the preceding claims, wherein the difference in storage capacities between the smallest and the largest storage media differs with a factor of between 100 and 10.000, such as with a factor in the order of 1000.

6. An electric converter system according to any of the preceding claims, wherein the actual amount of energy stored in each storage medium is used to determine which storage medium that is to be charged at a given time.

7. An electric converter system according to any of the preceding claims, wherein the storage media are discharged in order of decreasing or increasing storage capacity.

8. An electric converter system according to any of the preceding claims, wherein one of the storage media is charged and discharged constantly during use, and the one or more others is/are discharged when the output from the first storage medium is insufficient for the actual use of the system.

9. An electric converter system according to any of the preceding claims, wherein one or more of the storage media is/are (a) capacitor(s).

10. An electric converter system according to preceding claims, wherein one or more of the storage media is/are (a) rechargeable battery(ies).

11. An electric converter system according to any of the preceding claims, wherein the output signal is a pulsating electric signal.

12. An electric converter system according to claim 12, wherein the pulsating electric signal is generated by a blink converter.

13. An electric converter system according to claims 12 or 13, wherein the frequency of the output signal is constant.

14. An electric converter system according to claim 14, wherein the frequency is between 0.5 and 100 pulses per second, such as between 1 and 50 pulses per second, preferably between 1 and 10 pulses per second, such as between 1 and 5 pulses per second or between 5 and 10 pulses per second.

15. An electric converter system according to any of claims 12 to 15, wherein the frequency can be adjusted such as from between 1 to 5 Hz.

16. An electric converter system according to claim 16, wherein the frequency can be manually adjusted by means of a potentiometer.

17. An electric converter system according to any of claims 1 to 17, wherein the output signal is switchable between a flashing signal and a constant signal.

18. An electric converter system according to claim 18, wherein the output signal is constant during energy generation and flashing when no energy is generated.

19. An electric converter system according to claim 18, wherein the generated electric energy is by-passed the at least two storage media when the output signal is constant.

20. An electric converter system according to any of the preceding claims, wherein the electric converter further comprises a rectifier.

21. An electric converter system according to claim 21, wherein the rectifier comprises at least one diode.

22. An electric converter system according to any of the preceding claims, wherein the electric converter is used for supplying energy to at least one low energy consumption light, such as a halogen lamp or a light emitting diode.

23. An electric converter system according to any of the preceding claims, wherein the electric converter is mounted on a bicycle.

24. An electric converter system according to claim 23, wherein the magnet is mounted on at least one wheel of the bicycle and the rest of the system is mounted on the bicycle frame.

25. A bicycle having an electric converter system according to any of the preceding claims.

26. A method for controlling the charging and discharging of the storage media according to claim 1, said method comprising the steps of
- charging the first medium being a first capacitor until a certain voltage U1 is measured over the first capacitor by the controller,
- charging a larger second capacitor only when the first capacitor is retaining the certain voltage U1, and
- discharging the system by connecting the two capacitors in parallel and discharging them as one larger capacitor, for supplying energy to at least one low energy consumption light,
wherein the purpose of the second capacitor is to store energy for use when the amount discharged from the first capacitor is insufficient for the actual purpose.

## Patentansprüche

1. Stromwandlersystem zur Versorgung mindestens einer Leuchte mit geringem Energieverbrauch mit Strom, umfassend mindestens einen Magneten und mindestens eine Spule, wobei der Wandler weiterhin mindestens zwei Speichermedien umfasst, umfassend ein primäres Speichermedium, das ein Kondensator (5) ist, und ein sekundäres Speichermedium zum Speichern elektrischer Energie, die durch das Bewegen des einen oder der mehreren Magneten durch die eine Spule oder die mehreren Spulen erzeugt wird, wobei das primäre und das sekundäre Speichermedium unterschiedliche Speicherkapazitäten aufweisen, **dadurch gekennzeichnet, dass** das zuerst zu ladende primäre Speichermedium die kürzere Ladezeit bis zur vollständigen Ladung aufweist und dass der Zweck des sekundären Speichermediums das Speichern von Energie zur Verwendung für den Fall ist, dass die von dem primären Speichermedium abgegebene Menge nicht für den jeweiligen Zweck ausreicht.

2. Stromwandlersystem nach Anspruch 1, wobei die Speichermedien nacheinander in einer vorbestimmten Reihenfolge geladen werden.

3. Stromwandlersystem nach einem der vorhergehenden Ansprüche, wobei das Wandlersystem eine oder mehrere Regeleinheiten umfasst, die die Ladesequenz regeln.

4. Stromwandlersystem nach einem der vorhergehenden Ansprüche, wobei die verschiedenen Speichermedien verschiedener Speicherkapazitäten aufweisen und sie in der Reihenfolge der zunehmenden Speicherkapazität geladen werden.

5. Stromwandlersystem nach einem der vorhergehenden Ansprüche, wobei sich die verschiedenen Speicherkapazitäten in dem kleinsten und dem größten Speichermedium um einen Faktor zwischen 100 und 10.000 unterscheiden, wie um einen Faktor in der Größenordnung von 1000.

6. Stromwandlersystem nach einem der vorhergehenden Ansprüche, wobei die tatsächliche in jedem Speichermedium gespeicherte Energiemenge zur Bestimmung genutzt wird, welches Speichermedium zu jedem Zeitpunkt geladen werden muss.

7. Stromwandlersystem nach einem der vorhergehenden Ansprüche, wobei die Speichermedien in der Reihenfolge der abnehmenden oder zunehmenden Speicherkapazität entladen werden.

8. Stromwandlersystem nach einem der vorhergehenden Ansprüche, wobei eines der Speichermedien während der Verwendung laufend geladen und entladen wird und das eine oder die anderen entladen wird/werden, wenn die Leistung des ersten Speichermediums nicht für die jeweilige Verwendung des Systems ausreicht.

9. Stromwandlersystem nach einem der vorhergehenden Ansprüche, wobei eines oder mehrere der Speichermedien ein Kondensator ist bzw. Kondensatoren sind.

10. Stromwandlersystem nach den vorhergehenden Ansprüchen, wobei eines oder mehrere der Speichermedien ein wiederaufladbarer Akkumulator ist bzw. wiederaufladbare Akkumulatoren sind.

11. Stromwandlersystem nach einem der vorhergehenden Ansprüche, wobei das Ausgangssignal ein pulsierendes elektrisches Signal ist.

12. Stromwandlersystem nach Anspruch 12, wobei das pulsierende elektrische Signal von einem Blinkwandler erzeugt wird.

13. Stromwandlersystem nach einem Anspruch 12 oder 13, wobei die Frequenz des Ausgangssignals konstant ist.

14. Stromwandlersystem nach Anspruch 14, wobei die Frequenz zwischen 0,5 und 100 Impulsen pro Sekunde liegt, wie zwischen 1 und 50 Impulsen pro Sekunde, vorzugsweise zwischen 1 und 10 Impulsen pro Sekunde, wie zwischen 1 und 5 Impulsen pro Sekunde oder zwischen 5 und 10 Impulsen pro Sekunde.

15. Stromwandlersystem nach einem einem der Ansprüche 12 bis 15, wobei die Frequenz einstellbar ist, wie zwischen 1 und 5 Hz.

16. Stromwandlersystem nach Anspruch 16, wobei die Frequenz manuell mithilfe eines Potenziometers einstellbar ist.

17. Stromwandlersystem nach einem der Ansprüche 1 bis 17, wobei das Ausgangssignal zwischen einem Blinksignal und einem konstanten Signal schaltbar ist.

18. Stromwandlersystem nach Anspruch 18, wobei das Ausgangssignal während der Energieerzeugung konstant ist und blinkt, wenn keine Energie erzeugt wird.

19. Stromwandlersystem nach Anspruch 18, wobei die elektrische Energie an den mindestens zwei Speichermedien vorbeigeleitet wird, wenn das Ausgangssignal konstant ist.

20. Stromwandlersystem nach einem der vorhergehenden Ansprüche, wobei der Stromwandler weiterhin einen Gleichrichter umfasst.

21. Stromwandlersystem nach Anspruch 21, wobei der Gleichrichter mindestens eine Diode umfasst.

22. Stromwandlersystem nach einem der vorhergehenden Ansprüche, wobei der Stromwandler zur Versorgung mindestens einer Leuchte mit geringem Energieverbrauch, wie einer Halogenleuchte oder einer Leuchtdiode, mit Strom verwendet wird.

23. Stromwandlersystem nach einem der vorhergehenden Ansprüche, wobei der Stromwandler an einem Fahrrad montiert ist.

24. Stromwandlersystem nach Anspruch 23, wobei der Magnet an mindestens einem Rad des Fahrrads montiert ist und der Rest des Systems am Fahrradrahmen montiert ist.

25. Fahrrad mit einem Stromwandlersystem nach einem der vorhergehenden Ansprüche.

26. Verfahren zur Regelung des Ladens und Entladens des Speichermediums nach Anspruch 1, wobei das Verfahren folgende Schritte umfasst:
- Laden des ersten Mediums, das ein Kondensator ist, bis von der Regeleinheit eine bestimmte Spannung U1 am ersten Kondensator gemessen wird,
- Laden eines größeren zweiten Kondensators nur dann, wenn der erste Kondensator die bestimmte Spannung U1 hält, und
- Entladen des Systems durch Parallelschalten der zwei Kondensatoren und Entladen derselben als ein größerer Kondensator zur Versorgung mindestens einer Leuchte mit geringem Energieverbrauch mit Strom,
wobei der Zweck des zweiten Kondensators das Speichern von Energie zur Verwendung für den Fall ist, dass die von dem primären Speichermedium abgegebene Menge nicht für den jeweiligen Zweck ausreicht.

## Revendications

1. Système de transformateur électrique pour fournir de l'énergie à au moins une lampe à basse consommation d'énergie comprenant au moins un aimant et au moins une bobine, ledit transformateur comprenant également au moins deux supports de stockage comprenant un premier support de stockage qui est un condensateur (5) et un deuxième support de stockage pour stocker l'énergie électrique produite lorsque les un ou plusieurs aimants passent devant les une ou plusieurs bobines, dans lequel le premier et le deuxième support de stockage possèdent des capacités de stockage différentes, **caractérisé en ce que** le premier support de stockage, qui doit être chargé en premier, possède le temps de charge le plus court afin d'être totalement chargé, et **en ce que** le but du deuxième support de stockage est de stocker de l'énergie qui sera utilisée lorsque la quantité déchargée par le premier support de stockage est insuffisante pour le but réel.

2. Système de transformateur électrique selon la revendication 1, dans lequel les supports de stockage sont chargés un par un dans un ordre prédéfini.

3. Système de transformateur électrique selon l'une quelconque des revendications précédentes, dans lequel le système de transformateur comprend un ou plusieurs dispositifs de contrôle qui contrôlent la séquence de charge.

4. Système de transformateur électrique selon l'une quelconque des revendications précédentes, dans lequel les différents supports de stockage possèdent des capacités de stockage différentes, et sont chargés par ordre de capacité de stockage croissante.

5. Système de transformateur électrique selon l'une quelconque des revendications précédentes, dans lequel la différence de capacité de stockage entre le plus petit et le plus gros support de stockage diffère d'un facteur compris entre 100 et 10.000, par exemple d'un facteur de l'ordre de 1000.

6. Système de transformateur électrique selon l'une quelconque des revendications précédentes, dans lequel la quantité réelle d'énergie stockée dans chaque support de stockage est utilisée pour déterminer quel support de stockage doit être chargé à un moment donné.

7. Système de transformateur électrique selon l'une quelconque des revendications précédentes, dans lequel les supports de stockage sont déchargés par ordre de capacité de stockage décroissante ou croissante.

8. Système de transformateur électrique selon l'une quelconque des revendications précédentes, dans lequel un des supports de stockage est constamment chargé et déchargé pendant l'utilisation, et les un ou plusieurs autres sont déchargés quand la production du premier support de stockage est insuffisante pour l'utilisation réelle du système.

9. Système de transformateur électrique selon l'une quelconque des revendications précédentes, dans lequel un ou plusieurs des supports de stockage sont des condensateurs.

10. Système de transformateur électrique selon les revendications précédentes, dans lequel un ou plusieurs des supports de stockage sont des piles rechargeables.

11. Système de transformateur électrique selon l'une quelconque des revendications précédentes, dans lequel le signal de sortie est un signal électrique pulsatoire.

12. Système de transformateur électrique selon la revendication 12, dans lequel le signal électrique pulsatoire est généré par un transformateur intermittent.

13. Système de transformateur électrique selon les revendications 12 ou 13, dans lequel la fréquence du signal de sortie est constante.

14. Système de transformateur électrique selon la revendication 14, dans lequel la fréquence est comprise entre 0,5 et 100 impulsions par seconde, par exemple entre 1 et 50 impulsions par seconde, de préférence entre 1 et 10 impulsions par seconde, par exemple entre 1 et 5 impulsions par seconde ou entre 5 et 10 impulsions par seconde.

15. Système de transformateur électrique selon l'une quelconque des revendications 12 à 15, dans lequel la fréquence peut être réglée, par exemple entre 1 et 5 Hz.

16. Système de transformateur électrique selon la revendication 16, dans lequel la fréquence peut être réglée manuellement au moyen d'un potentiomètre.

17. Système de transformateur électrique selon l'une quelconque des revendications 1 à 17, dans lequel le signal de sortie peut être commuté entre un signal intermittent et un signal constant.

18. Système de transformateur électrique selon la revendication 18, dans lequel le signal de sortie est constant pendant la production d'énergie et intermittent quand aucune énergie n'est produite.

19. Système de transformateur électrique selon la revendication 18, dans lequel l'énergie électrique produite contourne les au moins deux supports de stockage quand le signal de sortie est constant.

20. Système de transformateur électrique selon l'une quelconque des revendications précédentes, dans lequel le transformateur électrique comprend également un redresseur.

21. Système de transformateur électrique selon la revendication 21, dans lequel le redresseur comprend au moins une diode.

22. Système de transformateur électrique selon l'une quelconque des revendications précédentes, dans lequel le transformateur électrique est utilisé pour fournir de l'énergie à au moins une lampe à basse consommation d'énergie, telle qu'une lampe halogène ou une diode électroluminescente.

23. Système de transformateur électrique selon l'une quelconque des revendications précédentes, dans lequel le transformateur électrique est monté sur une bicyclette.

24. Système de transformateur électrique selon la revendication 23, dans lequel l'aimant est monté sur au moins une roue de la bicyclette et le reste du système est monté sur le cadre de la bicyclette.

25. Bicyclette possédant un système de transformateur électrique selon l'une quelconque des revendications précédentes.

26. Procédé de contrôle de la charge et du déchargement des supports de stockage selon la revendication 1, ledit procédé comprenant les étapes consistant à :
- charger le premier support, qui est un premier condensateur, jusqu'à ce qu'une certaine tension U1 soit mesurée sur le premier condensateur par le dispositif de contrôle,
- charger un deuxième condensateur plus grand uniquement quand le premier condensateur retient la certaine tension U1, et
- décharger le système en raccordant les deux condensateurs en parallèle et en les déchargeant comme un condensateur plus grand, pour fournir de l'énergie à au moins une lampe à basse consommation d'énergie,
dans lequel le but du deuxième condensateur est de stocker de l'énergie qui sera utilisée lorsque la quantité déchargée par le premier condensateur est insuffisante pour le but réel.
